# EUROPEAN PATENT APPLICATION

(11) **EP 1 811 401 A1**
(43) Date of publication of application: **25.07.2007**
(21) Application number: 04773196.3
(22) Date of filing: 16.09.2004
(51) Int. Cl.: G06F 17/30

(54) **IMAGE SEARCH DEVICE, IMAGE SEARCH METHOD, IMAGE CREATION DEVICE, IMAGE CREATION METHOD, AND PROGRAM**

(71) Applicant: Fujitsu Ltd., Kawasaki-shi, Kanagawa 211-8588 (JP)
(72) Inventor: CHIBA, Hirotaka, c/o FUJITSU LIMITED, Kawasaki-shi, Kanagawa 2118588 (JP); NODA, Tsugio, c/o FUJITSU LIMITED, Kawasaki-shi, Kanagawa 2118588 (JP)
(74) Representative: Hitching, Peter Matthew
(86) International application number: PCT/JP2004/013549
(87) International publication number: WO 2006/030509

(57) **Abstract**

Image identifier information specific to image data to be input to an image search apparatus is embedded, in the image data as a steganography in advance. Meanwhile, the side of an image search apparatus decodes the steganography contained in image data, detects the image identifier information, compares the detected image identifier information with an externally instructed search condition and outputs image data if the aforementioned two kinds of information are identical.

## Description

### Technical Field

The present invention relates to an image search technique, an image production technique and a program, and in particular to a technique for searching a video picture used for a recording apparatus such as a video recorder, personal computer, video picture server, et cetera.

### Background Art

Keeping pace with a progress of an information society utilizing computers, an accumulation volume of digitized video picture information has become enormous, requiring a technique for quickly searching a target video picture.

In a video picture search, a first conceivable search method is to make an elapsed time of a series of recorded video pictures or a conversion table of a scene name corresponding to the elapsed time, and search by the elapsed time or scene name.

A second conceivable search method includes one disclosed by a patent document 1. That is, the method according thereto makes, and retains, a static image of a scene at the head of a series of recorded video pictures or that of representing scenes in a series of video pictures as an index image, followed by carrying out a search for a video picture of the search target by displaying a plurality of index images. It further makes static images of a plurality of scenes within a video picture (e.g., video pictures at each time which is a temporal length of video picture information equally divided by n) as index images (i.e., thumbnail screen) for searching a plurality of scenes included in a series of video pictures, and carries out a search by using the index images.

In the case of the above noted conventional first search method, there has been a technical problem of being unable to identify a search target scene if an editing, such as a replacement of a part of the video picture, or an alteration is made since an elapsed time is used as a search key.

And, the case of the above noted conventional second search method takes a great deal of time for a search if search target video pictures increase because a user must search visually from a large number of index images.

Furthermore, a search by referring to a thumbnail screen in a display is faced with a technical problem of inferior operability because an operational feeling is greatly different from an image search by, namely, a manual leafing as a common book and printed matter.

Patent document 1: Laid-Open Japanese Patent Application Publication No. 2001-76460

### Disclosure of Invention

A purpose of the present invention is to provide an image search technique capable of searching target image information firmly without being affected by an edit, alteration, et cetera of the image information.

Another purpose of the present invention is to provide an image search technique capable of quickly searching target image information regardless of a data volume of the image information.

Yet another purpose of the present invention is to provide an image search technique capable of searching image information in a computer quickly with good operability in a similar manner as handling a common book or a printed matter.

A first aspect of the present invention is to provide an image search apparatus, comprising:
an identifier information detection unit for extracting identifier information from image information embedded with the identifier information as secret information;
a search condition input unit for inputting a search condition for the image information; and
a search judgment unit for searching the image information based on the identifier information and search condition.

A second aspect of the present invention is to provide an image search apparatus, comprising:
an image information input unit for inputting image information;
a search condition detection unit for inputting a search condition from a printed medium on which search image information embedded with the search condition as a steganography for the image information is printed; and
a search judgment unit for searching the image information based on the search condition.

A third aspect of the present invention is to provide an image search apparatus, comprising:
an identifier information detection unit for extracting identifier information from image information embedded with the identifier information as secret information; and
an identifier information judgment unit for judging a presence or absence of an alteration of the image information based on the identifier information in the image information.

A fourth aspect of the present invention is to provide an image search method, comprising the steps of:
inputting, from an image medium, image information embedded with identifier information as secret information;
extracting the identifier information from the image information;
inputting a search condition for the image information; and
searching the image information based on the identifier information and search condition.

A fifth aspect of the present invention is to provide an image search method, comprising the steps of:
inputting, from an image medium, image information embedded with identifier information as steganography;
extracting the identifier information from the image information; and
judging a presence or absence of an alteration in the image information based on the identifier information.

A sixth aspect of the present invention is to provide an image search method, comprising the steps of:
inputting image information;
inputting a search condition from a printed medium on which search image information embedded with the search condition as a steganography for the image, information is printed; and
searching the image information based on the search condition.

A seventh aspect of the present invention is to provide an image production apparatus, comprising:
an input unit for inputting image information;
a steganography embedment unit for embedding identifier information, which is used for searching the image information, in the aforementioned image information as a steganography which is not lost in the process of converting the image information into analog information; and
an image output unit for outputting the image information embedded with the steganography to an image medium.

An eighth aspect of the present invention is to provide an image production method, comprising the steps of:
inputting image information; embedding identifier information, which is used for searching the image information, in the aforementioned image information as a steganography which is not lost in the process of converting the image information into analog information; and
outputting the image information embedded with the steganography to an image medium.

A ninth aspect of the present invention is to provide a program for making a computer which comprises an image search apparatus execute the steps of:
inputting, from an image medium, image information embedded with identifier information as secret information;
extracting the identifier information from the image information;
inputting a search condition for the image information; and
searching the image information based on the identifier information and search condition.

A tenth aspect of the present invention is to provide a program for making a computer which controls an image production apparatus execute the steps of:
inputting image information; embedding identifier information, which is used for searching the image information, in the aforementioned image information as a steganography which is not lost in the process of converting the image information into analog information; and
outputting the image information embedded with the steganography to an image medium.

As noted above, the present invention is contrived to embed identifier information as secret information , such as steganography, et cetera, at the time of recording image information such as a video picture, and search image information by the embedded identifier information as a search key. This contrivance embeds identifier information directly in a video picture, thereby enabling a search responding to an edit or alteration of a video picture. Furthermore, it uses a steganography embedded in image information as identifier information of the aforementioned image information and therefore the identifier information is not erased even if the image information is converted into an analog signal. Therefore, a recording apparatus for retaining image information as a search target can utilize not only digital-series recording apparatuses, such as a hard disk drive (HDD), digital versatile disk (DVD), compact disk (CD), et cetera, but also analog-series recording apparatus using a video tape, et cetera, as a recording medium.

This contrivance also embeds identifier information in image information by means of steganography and search the identifier information, thereby making it possible to search the image information without being affected by an edit, alteration, et cetera, of the image information.

It also stores name information such as a scene name, et cetera, corresponding to identifier information on an as required basis at the time of recording, and searches a video picture with the scene name as a search key at the time of searching, thereby making it possible to instruct easily a search for a search target video picture.

In this event, if a search instruction can be provided by a voice at the time of a search, the operability is improved. Accordingly performed is to record identifier information and a scene name simultaneously by means of a voice input and voice recognition at the time of photographing a video picture on an as required basis. At the time of a search, the search is carried out by identifying the scene name by means of a voice input and voice recognition, thereby enabling a search in good operability.

It also prints image information embedded with identifier information as a steganography on a printed medium, such as a card or sheet; selects the card or sheet on which a target image is printed by flipping the cards or sheets as if handling a book or magazine; has a search apparatus read the identifier information by inserting the card or sheet therein and the search apparatus search the image information with the identifier information at the time of a search, thereby making it possible to shorten a search time and also search an image in a feeling of handling a book or magazine, thus improving operability.

In the case of video picture information as a target of search being a monitor image which has a possibility of being used as material evidence, for example, its originality (i.e., absence of an alteration) must be certified. The present invention is contrived to enable the validation of originality by a presence or absence of identifier information embedded in image information by means of steganography, thereby making it possible to utilize not only for searching image information but also for judging a presence or absence of an alteration of the image information.

### Brief Description of Drawings

Fig. 1 is a conceptual diagram exemplifying an operation of an image search apparatus embodying an image search method according to an embodiment of the present invention;
Fig. 2 is a block diagram exemplifying a comprisal of an image search apparatus of a preferred embodiment embodying an image search method according to an embodiment of the present invention;
Fig. 3 is a block diagram exemplifying an internal comprisal of an image search apparatus according to an embodiment of the present invention;
Fig. 4 is a conceptual diagram exemplifying a comprisal of a computer system used for implementing an image search apparatus according to an embodiment of the present invention;
Fig. 5 is a conceptual diagram showing a modified example of an image search apparatus according to an embodiment of the present invention;
Fig. 6 is a conceptual diagram exemplifying operations of an image production, apparatus and of an image search apparatus according to an embodiment of the present invention;
Fig. 7 is a flow chart exemplifying an operation of an image search apparatus according to an embodiment of the present invention;
Fig. 8 is a conceptual diagram showing a modified example of an image search apparatus according to an embodiment of the present invention;
Fig. 9 is a conceptual diagram exemplifying an operation of an image search apparatus embodying an image search method according to another embodiment of the present invention;
Fig. 10 is a block diagram exemplifying a comprisal of an image search apparatus according to an embodiment of the present invention;
Fig. 11 is a block diagram exemplifying a comprisal of an image search apparatus according to yet another embodiment of the present invention;
Fig. 12 is a conceptual diagram exemplifying a comprisal of an image production apparatus according to yet another embodiment of the present invention;
Fig. 13 is a flow chart exemplifying an operation of an image production apparatus according to an embodiment of the present invention; and
Fig. 14 is a flow chart exemplifying an operation of an image production apparatus according to an embodiment of the present invention.

### Best Mode for Carrying Out the Invention

The following is a detailed description of the preferred embodiment of the present invention by referring to the accompanying drawings.

Note that a common component sign is assigned to a common constituent element for individual drawings, embodiments, modified examples, et cetera and a duplicate description is omitted in the following description.

Note also that the "image medium" is a concept comprehending a printed medium such as paper, et cetera, a communication medium such as an information and telecommunication line, et cetera, and an accumulation medium constituted by a discretionary storage medium such as semiconductor memory, optical storage medium, magnetic storage medium, et cetera.

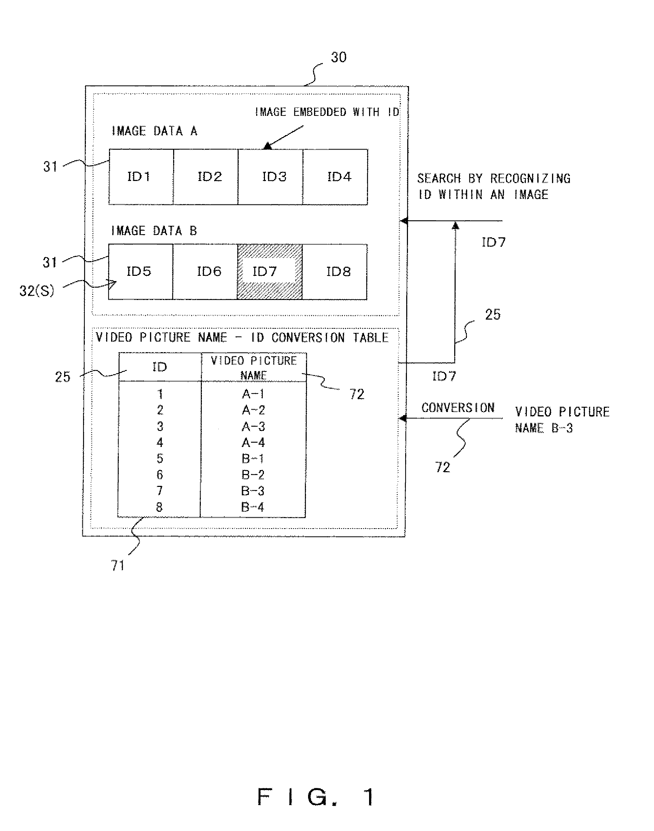

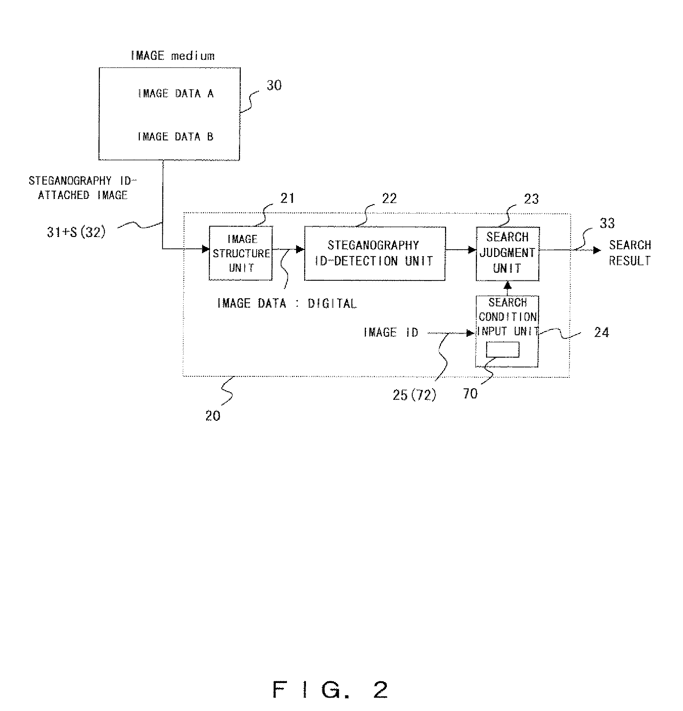

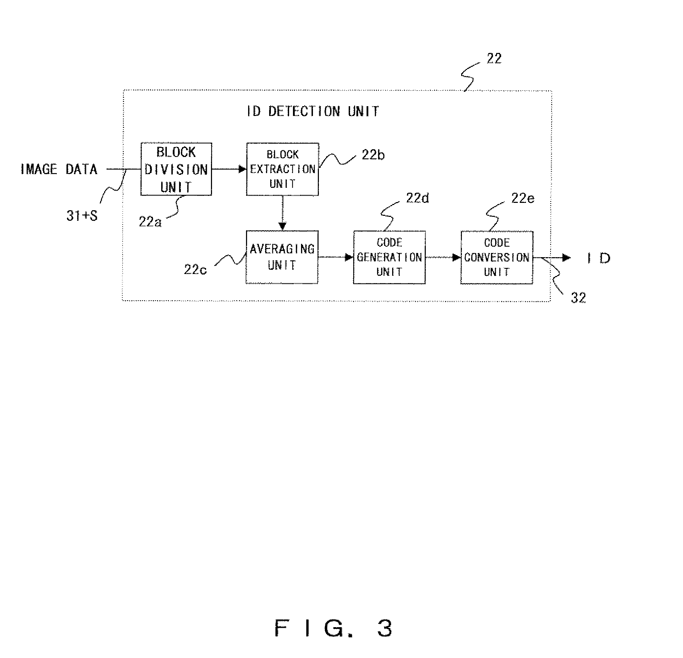

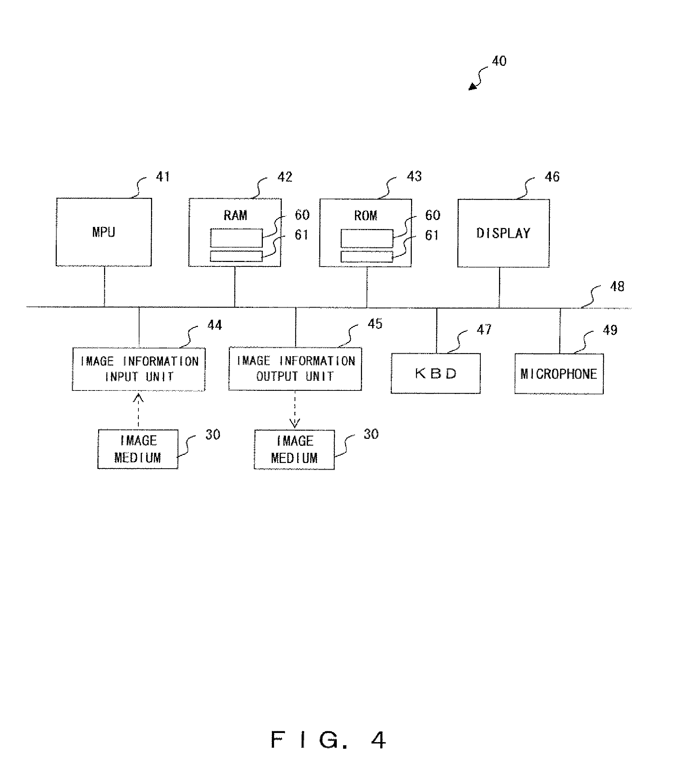

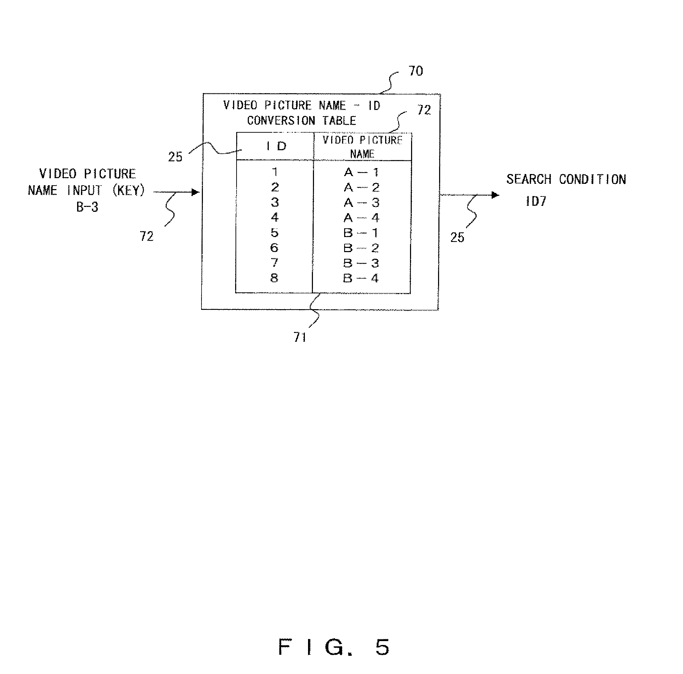

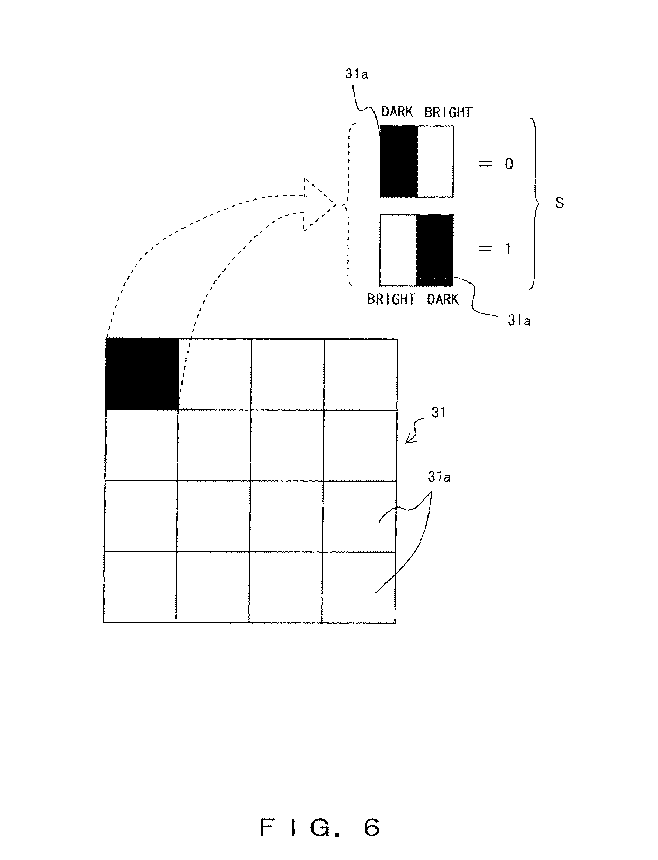

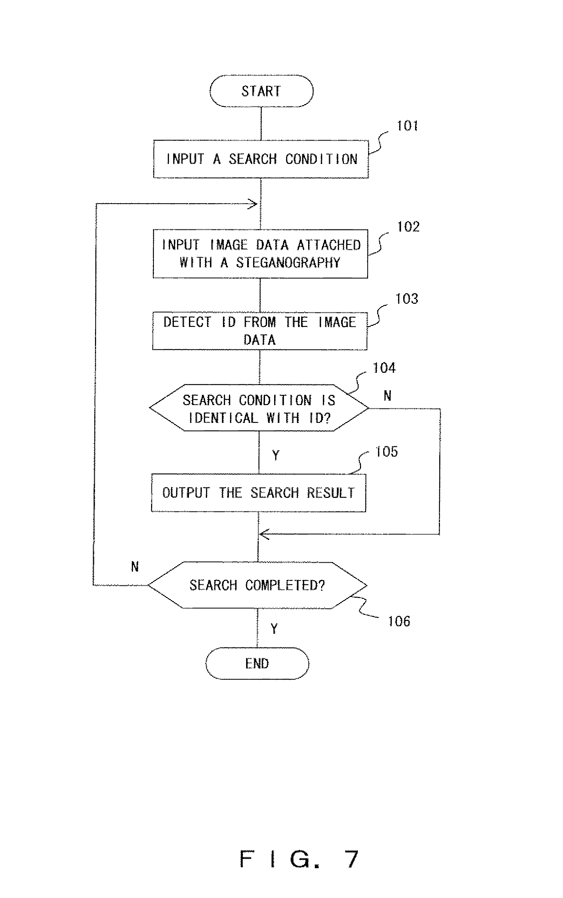

Fig. 1 is a conceptual diagram exemplifying an operation of an image search apparatus embodying an image search method according to an embodiment of the present invention; Fig. 2 is a block diagram exemplifying a comprisal of an image search apparatus of a preferred embodiment embodying an image search method according to an embodiment of the present invention; Fig. 3 is a block diagram exemplifying an internal comprisal of an image search apparatus according to the present embodiment; Fig. 4 is a conceptual diagram exemplifying a comprisal of a computer system used for implementing an image search apparatus according to the present embodiment; Fig. 5 is a conceptual diagram showing a modified example of an image search apparatus according to the present embodiment; Fig. 6 is a conceptual diagram exemplifying operations of an image production apparatus and of an image search apparatus according to the present embodiment; and Fig. 7 is a flow chart exemplifying an operation of an image search apparatus according to the present embodiment.

As exemplified in Fig. 1, the search technique according to the present embodiment is configured to embed an image ID 32, in image data 31 of a search target that is retained by an image medium 30 comprised by a video picture data server, et cetera, as secret information by means of a later described steganography S. Also created at the time of making the image data 31 is a video picture name-ID conversion table 71 for recording an image ID 32 and a video picture name 72 such as a scene name, et cetera, by correlating with one another, on an as required basis.

That is, the present embodiment is configured to pre-record identifier information (i.e., an image ID 32) uniquely assigned to image data 31 therein, which is stored in an image medium 30 of a search target, as a steganography S, that is, secret information, by mixing with the image data 31 without degrading an image quality thereof and in a state of being not discerned by the naked eyes of a person viewing the image data 31. The steganography S according to the present embodiment is a technique for embedding discretionary information in image data 31 in a secret state by taking advantage of a visual characteristic of the human eye of which the sensitivity differs depending on the color and/or size of an object as described later.

That is, the present embodiment is so configured that the steganography S divides the image data 31 into a plurality of blocks, converts the image ID 32 into a code by manipulating characteristic information of an individual block and/or between blocks in the range of a human vision being hardly capable of discerning and embeds the code in the image data 31, for example.

Characteristic information of a block, or a sub-block which is a division of the aforementioned block, may use any value provided one which is obtained from the image data 31, such as a positional relationship between individual blocks, contrast, graininess of image, color saturation, centroid, variance, et cetera.

As exemplified in Fig. 2, an image search apparatus 20 according to the present embodiment for searching image information in the image medium 30 comprises an image structure unit 21 for converting analog image data 31 input from the image medium 30 into digital data; a steganography ID detection unit 22 for extracting an image ID 32 recorded as a steganography S from the image data 31; a search judgment unit 23; and a search condition input unit 24 for externally inputting an image ID 25.

The search judgment unit 23 compares the image ID 32 extracted from the image data 31 by the steganography ID detection unit 22 with the image ID 25 which is input by the search condition input unit 24 and, if the aforementioned two kinds of information are identical, outputs the image data 31 embedded with the aforementioned image ID 32 to a discretionary image medium, image display apparatus, et cetera, (neither of which is shown herein), as a search result 33.

As exemplified in Fig. 3, the steganography ID detection unit 22 comprises a block division unit 22a and a block extraction unit 22b for dividing the image data 31 embedded with steganography S into a plurality of image blocks 31a and selecting/extracting it according to a prescribed rule; an averaging unit 22c for normalizing brightness levels, for example, of individual image blocks 31a; a code generation unit 22d for dividing the normalized image block 3la into two sub-blocks (on the left and right sides) and performing a coding (refer to Fig. 6) which assigns "0" or "1" depending on which of the left and right divided blocks is brighter; and a code conversion unit 22e for outputting, as an image ID 32, by applying a prescribed arithmetic operation to a result of the coding of the individual image blocks 31a.

The image search apparatus 20 configured as described above can be implemented by, for example, a computer system 40 and a search control program 60 executed by the computer system 40 which are exemplified by Fig.4.

That is, the computer system 40 according to the present embodiment comprises a microprocessor 41 for controlling the entirety thereof, a main storage 42 storing information such as a program and data executed by the microprocessor 41, a nonvolatile storage apparatus 43 retaining the aforementioned program and data permanently, an image information input unit 44 for inputting image data 31 from a discretionary image medium 30, an image information output unit 45 for outputting image data 31 to a discretionary image medium 30, a display 46 visually displaying information such as image data 31, a key board 47 used for a user inputting information and a. bus 48 as an information transmission path connecting the aforementioned components.

The nonvolatile storage apparatus 43 stores the search control program 60 for accomplishing the functions of respective constituent units of the image search apparatus 20. And the functions of the respective units of the image search apparatus 20 are accomplished by loading the search control program 60 in the main storage 42 and executing the program 60 by the microprocessor 41. The search result 33 may be output to, and displayed by, the display 46, or stored in a discretionary image medium 30 by way of the image information output unit 45, on an as required basis.

That is, in the case of implementing the image search apparatus 20 exemplified in Fig. 2 by the computer system 40 exemplified in Fig. 4, the image structure unit 21 corresponds to the image information input unit 44, the search condition input unit 24 corresponds to the key board 47, and the other functions are accomplished by the search control program 60.

The following is a description on an example operation of the image search apparatus 20 according to the present embodiment by referring to the flow chart shown by Fig. 7, and other drawings.

First, in the image search apparatus 20, a user sets information of an image ID 25 in the search condition input unit 24 by the method of a key input, et cetera (step 101).

The above step is followed by converting image data 31 in an analog state into digital by way of the image structure unit 21 and inputting it to the steganography ID detection unit 22 (step 102) which in turn detects an image ID 32 from a steganography S included in the image data 31 (step 103).

It is followed by collating the image ID 32 detected by the steganography ID detection, unit 22 with the image ID 25 set by the search condition input unit 24 (step 104) and, if the aforementioned two IDs are identical, judging that the search target image data 31 is found and outputting the image data 31 including the aforementioned image ID 32 to the display 46 or a desired image medium (step 105). If the two IDs are judged to be not identical in the step 104, no process is carried out.

It is followed by judging whether or not the search has reached at the end of the image data 31, that is, the completion of the search (step 106) and, if it is not completed, repeating the above described step 102 and thereafter.

As described above, the present embodiment is configured to embed the image ID 32 in the image data 31 by means of the steganography S at the time of recording a video picture and register it in the image medium 30 of a video picture server, et cetera; followed by searching with the image ID 32 which is embedded in the image data 31 as a search key.

Thus, an accurate search is enabled without being affected by an edit or alteration of the image data 31 since the image ID 32 is directly embedded in the image data 31. Furthermore, a use of the steganography S for embedding the image ID 32 does not erase it even though the image data 31 recorded in the image medium 30 is converted into an analog signal, and therefore the image medium 30 or recording apparatus is enabled to handle, as a search target, not only image data 31 stored in the digital-series image medium 30 such as HDD, DVD, CD, et cetera, but also one stored in the analog-series image medium 30 such as a video tape, et cetera, of an analog system.

While the image ID 25 is directly input to the search condition input unit 24 in the above described embodiment; however, in the case of adopting an image ID 25 by using a number or sign as a search key, there is a case of a direct search for image data 31 of a search target being difficult if the image data 31 has gone through an edit such as interchanging the sequence of the image data 31, or the like.

Accordingly, the following describes a modified example of the present embodiment which employs the method of storing also a video picture name 72 such as a scene name corresponding to an image ID 32 at the time of recording image data 31 and utilizing it as a search key at the time of a search.

That is, the modified example is configured to record a video picture name 72 corresponding to the image ID 32 embedded as a steganography S in image data 31 in a video picture name-ID conversion table 71 at the time of recording the aforementioned image data 31 as exemplified in Fig. 1.

It is also configured to equip the search condition input unit 24 of the image search apparatus 20 with a video picture name-ID conversion unit 70. The video picture name-ID conversion unit 70 reads, and uses, the video picture name-ID conversion table 71 which is generated at the time of recording the above described image data 31 from the image medium 30 storing the image data 31, thereby performing an operation of converting an externally input video picture name 72 into a corresponding image ID 25 and inputting it to the search judgment unit 23 as exemplified in Fig. 5.

This configuration enables a search for the image data 31 by the video picture name 72 such as a scene name, et cetera, which is easily understandable for the user at the time of a search, thereby making it possible to search a search target video picture simply and improve operability at the time of a search.

Moreover, the operability is further improved if the information of the image ID 25 or video picture name 72 can be instructed to the image search, apparatus 20 by means of a voice input.

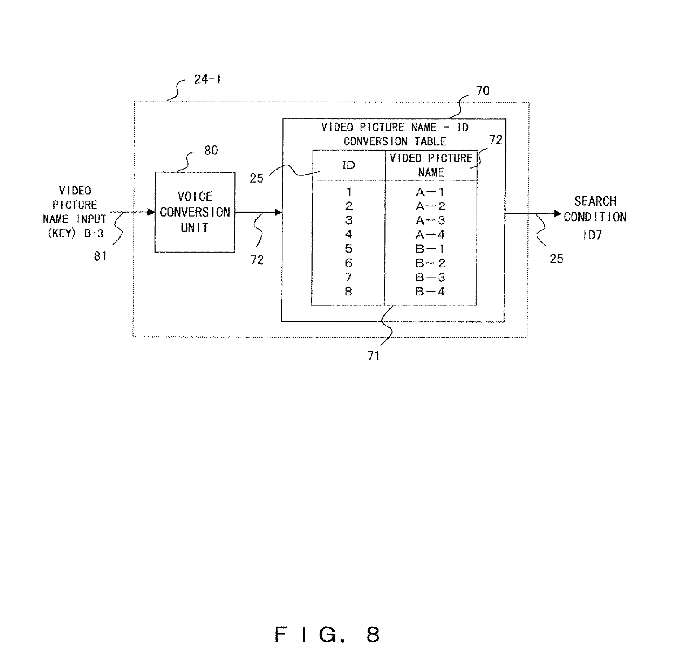

Accordingly, the following describes yet another modified example of the present embodiment in which the image search apparatus 20 is equipped with a search condition input unit 24-1 comprising a voice conversion unit 80 and a video picture name-ID conversion unit 70 as exemplified in Fig. 8. In this case, an image ID 32 and a video picture name 72, such as a scene name, et cetera, may be simultaneously recorded by means of an voice input and of a voice recognition on an as required basis at the time of photographing the image data 31.

Then, the user inputs the video picture name 72 such as a target scene name, et cetera, to the voice conversion unit 80 comprised by the search condition input unit 24-1 by means of a voice input 81 so that the voice conversion unit 80 converts the voice input 81 into the video picture name 72 by means of the voice recognition, followed by the video picture name-ID conversion unit 70 identifying the image ID 25 from the video picture name 72 and inputting it to the search judgment unit 23 to carry out a search, at the time of searching the image data 31 at the image search apparatus 20. This configuration makes it possible to search the image data 31 by means of a voice input, therefore improving workability in a search operation.

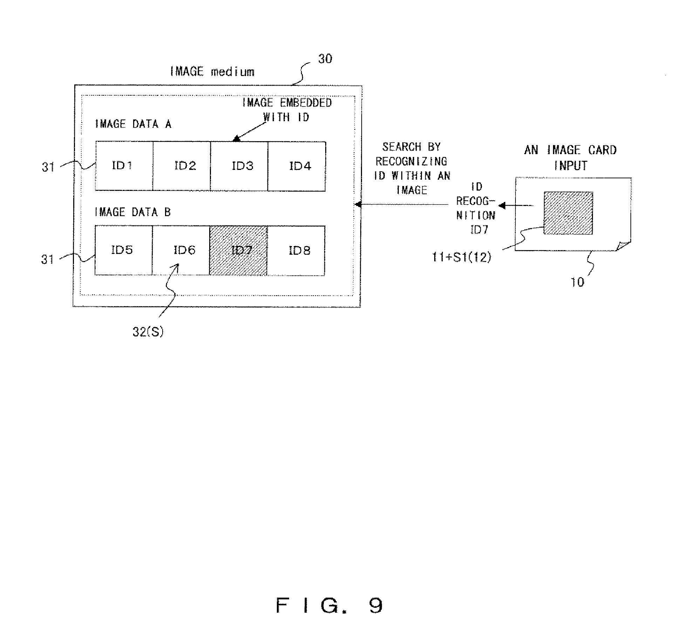

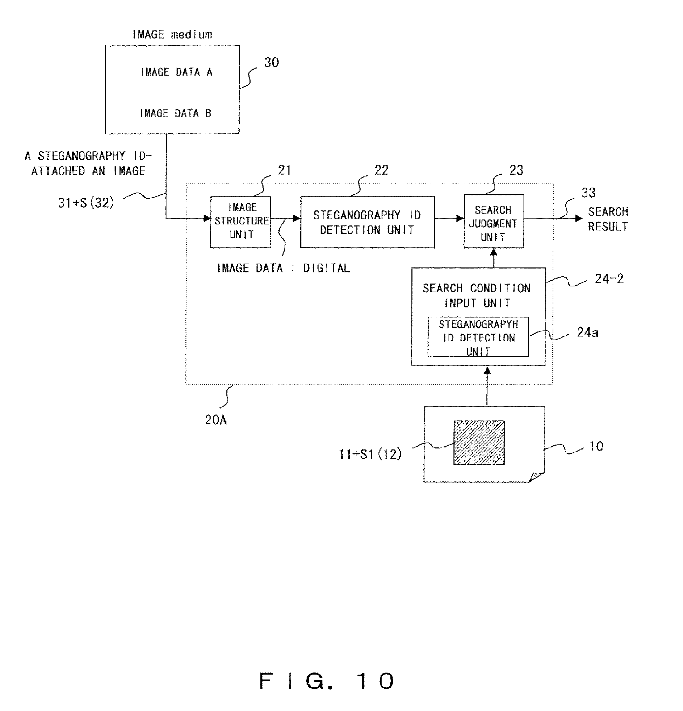

Fig. 9 is a conceptual diagram exemplifying an operation of an image search apparatus embodying an image search method according to another embodiment of the present invention; and Fig. 10 is a block diagram exemplifying a comprisal of the image search apparatus according to the present embodiment.

The image search apparatus 20A according to a preferred embodiment comprises a search condition input unit 24-2 including a steganography ID detection unit 24a in place of the search condition input unit 24, which is different from the above described image search apparatus 20.

That is, the present embodiment is configured to print image data 11 which is related to specific image data 31 of a search target on a search card 10, and also embed, in the image data 11 as a steganography S1, an image ID 12 corresponding to the image ID 32 embedded in the image data 31.

And, when searching the image data 31, the user selects a target search card 10 by looking at the image data 11 printed on the search card 10 as a marker and sets it to the search condition input unit 24-2 of the image search apparatus 20A so that the steganography ID detection unit 24a detects the steganography S1 (i.e., the image ID 12) included in the image data 11 and inputs it as a search key to the search judgment unit 23.

Then, the search judgment unit 23 collates the image ID 32 within the image data 31 with the image ID 12 input from the search card 10 and carries out a search for the image data 31 as exemplified in Fig. 9.

A search by a list of thumbnails in the screen increases a search time proportionately with the number of scenes due to a display time in a conventional method. Contrarily, the present embodiment makes it possible to select a search card 10, on which target image data 11 is printed, from among a plurality of search cards 10 in a similar feeling of searching by flipping pages of a printed matter such as a book or magazine, and carry out a search for image data 31 input from an image medium 30 by only the search card 10 is read to the image search apparatus 20A, thereby enabling a shortening of the search time and an improvement of operability greatly.

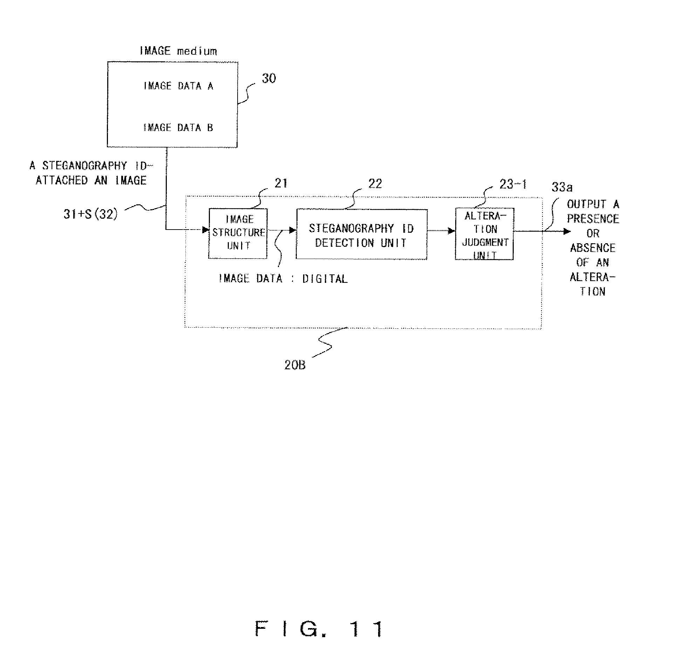

Fig. 11 is a block diagram exemplifying a comprisal of an image search apparatus according to yet another embodiment of the present invention.

The image search apparatus 20B according to a preferred embodiment comprises an image structure unit 21 for converting analog image data 31 input from an image medium 30 into digital data; a steganography ID detection unit 22 for extracting, from the image data 31, an image ID 32 recorded as a steganography S; and an alteration judgment unit 23-1 for outputting an alteration detection result 33a based on a detection or absence thereof of the image ID 32 by means of the steganography S at the steganography ID detection unit 22.

That is, the image search apparatus 20B is configured to discern firmly a presence or absence of an alteration in image data 31 based on a presence or absence of an image ID 32 being embedded in the aforementioned image data.

In the case of search target image data 31 being used as a material evidence of monitoring a specific object, the originality of the aforementioned image data, that is, an absence of an alteration must be certified.

According to the present embodiment, image data 31 as a storage target is embedded with an image ID 32 by means of the steganography S at the time of recording a video picture in the image medium 30 so that the alteration judgment unit 23-1 detects a presence or absence of the image ID 32 in the image data 31, thereby enabling a firm detection of a presence or absence of an alteration in the image data 31.

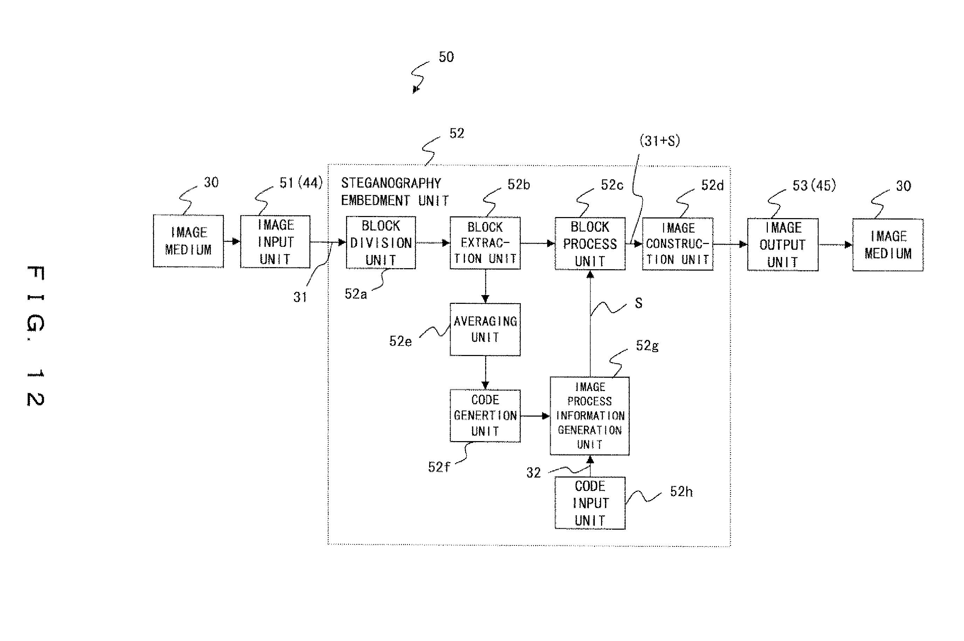

Fig. 12 is a conceptual diagram exemplifying a comprisal of an image production apparatus according to yet another embodiment of the present invention. The image production apparatus 50 according to another preferred embodiment is configured to perform the operation of making an image ID 32 coexist with image data 31 as a steganography S in advance and output it to a discretionary image medium 30 for a search, a detection of an alteration, et cetera of the above described each preferred embodiment.

The image production apparatus 50 according to the present embodiment embeds a steganography S in image data 31 by the coding principle exemplified in the above described Fig. 6 as in the case of the image search apparatus 20.

The image production apparatus 50 according to the present embodiment comprises an image input unit 51 for inputting image data 31 from an image medium 30; a steganography embedment unit 52 for embedding, in image data 31, an image ID 32 uniquely designated to the aforementioned image data 31 as a steganography S; and an image output unit 53 for outputting the image data 31 embedded with the steganography S to the original image medium 30 or another image medium 30.

The steganography embedment unit 52 comprises a block division unit 52a, a block extraction unit 52b, a block process unit 52c, an image structure unit 52d, an averaging unit 52e, a code generation unit 52f, an image process information generation unit 52g and a code input unit 52h.

The code input unit 52h receives a setup or input of external information, such as an image ID 32 to be embedded in the image data 31.

The block division unit 52a and block extraction unit 52b divide the image data 31 digitized by the image input unit 51 into a plurality of blocks, extract them individually by a prescribed rule and send out to the averaging unit 52e and block process unit 52c.

The averaging unit 52e normalizes, for example, brightness levels of individual image blocks 31a. The code generation unit 52f divides the image block 31a normalized by the averaging unit 52e into two sub-blocks of the left and right sides and performs a coding assigning 0 or 1 depending on either of the left and right sub-blocks being brighter and outputs it to the image process information generation unit 52g.

The image process information generation unit 52g discerns whether the brightness of the left and right sub-blocks of the image block 31a is to be used as is or reversed in order to respond to the image ID 32 so as to reflect the steganography S eventually to the image ID 32 designated to the code input unit 52h , and instructs the block process unit 52c with the discerning result.

The block process unit 52c maintains the levels of brightness of the left and right blocks as is for the image block 31a coming in from the block extraction unit 52b, or applies, to the aforementioned image block 31a, the process for reversing them for responding to the image ID 32 based on the instruction from the image process information generation unit 52g, thereby carrying out the process for embedding, in the image data 31, a steganography S expressing the image ID 32 designated at the code input unit 52h.

That is, for example, even though a brightness component of yellow, which is supposed to be low on the sensitivity of an observing naked human eyes, is changed between the left and right sub-blocks, the naked eyes cannot recognize, thereby making it possible to embed the image ID 32 in the image data 31 as a steganography S without being noticed by an observer, that is, without degrading an image quality of the image data 31. Even if it is output as analog to a printing and a displaying, there is only a little variance of characteristic information used for the steganography S because the image block 31a is handled as a unit, thereby enabling the accomplishment of a stable coding.

An alternative configuration may be in a manner to embed a plurality of the same image IDs 32 as steganography S redundantly on an as required basis in image data 31 and determine a single image ID 32 eventually based on the rule of majority among the plurality of image IDs 32 detected from the image data 31.

The image construction unit 52d constructs the original image data 31 by arraying the plurality of image blocks 31a, converts it into analog on an as required basis and outputs it to a discretionary image medium 30 by way of the image output unit 53.

As such, the steganography embedded in the image data 31 by the image production apparatus 50, et cetera, is decoded by the above described steganography ID detection unit 22 of the above described image search apparatus 20, et cetera, and the image ID 32 is detected.

Note that the image production apparatus 50 is incorporated in the above described computer system 40 shown in Fig. 3 and is implemented by an image data production program 61 installed in the computer system 40 and executed by the microprocessor 41.

That is, the image input unit 51 corresponds to the image information input unit 44, the image output unit 53 corresponds to the image information output unit 45 and the steganography embedment unit 52 corresponds to the image data production program 61.

Note that the principle of embedding and detecting the above described steganography is an example, and is possible to use a technique disclosed by a Laid-Open Japanese Patent Application Publication No. 2004-94551 for example for further detail.

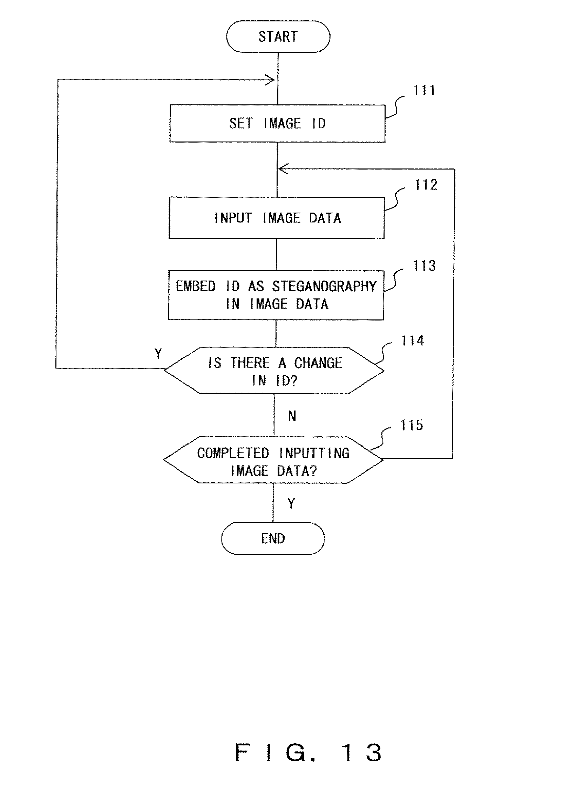

The following is a description on an example operation of the image production apparatus 50 according to the present embodiment by referring to the flow chart shown in Fig. 13, and other drawings.

First, the code input unit 52h of the steganography embedment unit 52 is initially set with an image ID 32 in image data 31 of a production (i.e., photographing) target (step 111). Note that the image ID 32 is enabled to change temporally in synchronous with an input of image data 31, and the image ID 32 can use a time stamp, a serial number which is incremented in synchronous with an input of image data 31, for example, or other data. Alternatively, a video picture name 72, such as a scene name, et cetera, is may be input, on an as required basis, by means of a voice input for recording in the video picture name-ID conversion table 71 along with the image ID 32.

It is followed by starting an input (i.e., photographing) of image data 31 (step 112), embedding the image ID 32 in the input image data 31 as a steganography S and outputting it to a desired image medium (step 113), examining whether there is a change in a setup state of the image ID 32 (step 114) and, if there is a change, returning to the setup step of the image TD 32 in the step 111 for setting the image ID 32 and continuing the inputs of image data 31.

If the step 114 judges that there is no change in the image ID 32, the process judges whether or not the input of image data 31 is completed (step 115) and, if it is not completed, it returns to the step 112 for continuing the input of image data 31, while if it is completed, finishes the production (i.e., photographing) of image data 31.

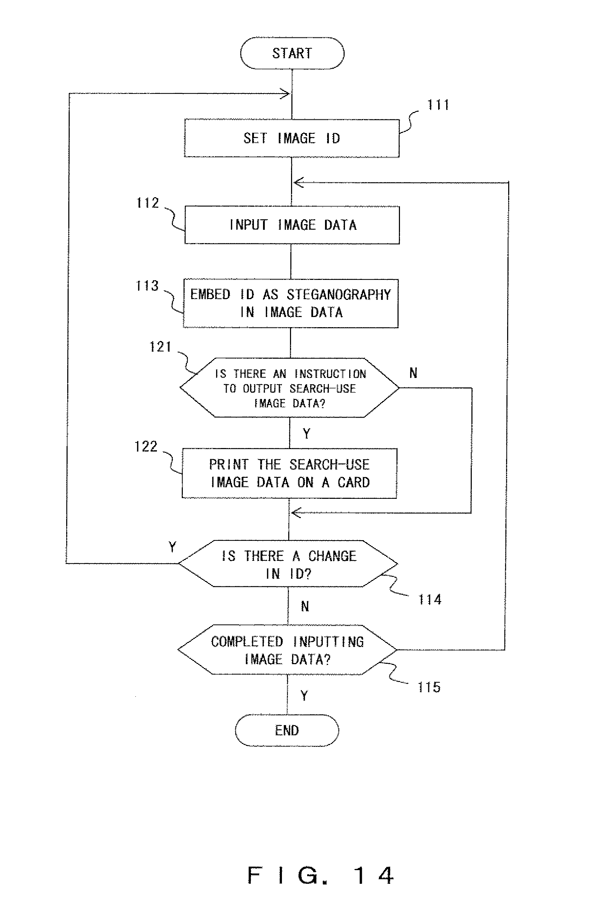

The next is a description on a modified example operation of the image production apparatus 50 in the case of producing a search card 10 at the time of making image data 31, by referring to the flow chart shown in Fig. 14.

Referring to Fig. 14, the flow chart is different from that of Fig. 13 where the processes of the steps 121 and 122 for printing and outputting a search card 10 are added between the steps 113 and 114 in the flow chart shown in the above described Fig. 13.

That is, the step 121 discerns a presence or absence of an instruction to output a search-use image (i.e., image data 11), that is, of an instruction to print and output to the search card 10, from the user making image data 31 and, if there has been such an output instruction, the step 122 embeds, in image data 11 such as one scene of image data 31 for example, an image ID 12, as a steganography S, equivalent to the image ID 32 corresponding to the aforementioned image data 31, followed by printing it on the search card 10.

Thusly printed search card 10 is used for searching image data 31 in the image search apparatus 20A shown in Fig. 10 as described above.

As described above, the image search technique according to the present embodiment makes it possible to provide a image search capable of an accurate search and reducing a load on the user without affecting by an edit or alteration.

That is, the technique embeds an image ID 32 as a steganography S directly in the image data 31, enabling accurate search uninfluenced by an edit or alteration of the image data 31. Furthermore, it embeds the image ID 32 as a steganography S in the image data 31, and therefore the image ID 32 is not lost even if the image data 31 is converted into an analog signal, thus also providing a benefit of preventing an alteration of the image data 31.

Moreover, even if a data volume of image data 31 is large, there is no longer a need to browse a large number of thumbnail images proportionately with the data volume of the image data 31, and therefore the target image data 31 can be searched quickly regardless of a data volume of the image data 31.

The technique also prints image data 11 as a marker for a search and an image ID 12 embedded in the image data 11 by means of a steganography S1 and lets the user select a search card 10, thereby making it possible to use it as search key information and shorten a search time of the user and improve operability for the user.

Note that the present invention can be changed variously within the scope thereof in lieu of being limited to the configurations put forth in the above described embodiments.

### Applicability to Industries:

The present invention is capable of providing an image search technique capable of searching target image information firmly without being influenced by an edit, alteration, et cetera, of the image information.

It is also capable of providing an image search technique capable of searching target image information quickly regardless of a data volume of the image information.

It is also capable of searching image information in a computer quickly with good operability in the same manner as handling a common book or printed matter.

## Claims

1. An image search apparatus, comprising:
an identifier information detection unit for extracting identifier information from image information embedded with the identifier information as secret information;
a search condition input unit for inputting a search condition for the image information; and
a search judgment unit for searching the image information based on the identifier information and search condition.

2. The image search apparatus according to claim 1, wherein
said secret information is a steganography which divides said image information into a plurality of blocks and manipulates characteristic information of the blocks and/or between blocks, thereby coding said identifier information and embedding it in the image information.

3. The image search apparatus according to claim 1, wherein
said search condition input unit, comprising a conversion table storing said identifier information and a video picture name by correlating the former with the latter, converts the video picture name, which is externally input, into the identifier information and inputs it to said search judgment unit.

4. The image search apparatus according to claim 1, wherein
said search condition input unit, comprising a voice recognition unit, has the unit convert externally input voice information into said identifier information and inputs it to said search judgment unit.

5. The image search apparatus according to claim 1, wherein
said search condition input unit, comprising a search condition detection unit for extracting said search condition from a printed medium printed with search image information in which the search condition is embedded as a steganography, inputs the search, condition obtained from the printed medium to said search judgment unit.

6. An image search apparatus, comprising:
an image information input unit for inputting image information;
a search condition detection unit for inputting a search condition from a printed medium on which search image information embedded with the search condition as a steganography for the image information is printed; and
a search judgment unit for searching the image information based on the search condition.

7. An image search apparatus, comprising:
an identifier information detection unit for extracting identifier information from image information embedded with the identifier information as secret information; and
an identifier information judgment unit for judging a presence or absence of an alteration of the image information based on the identifier information in the image information.

8. An image search method, comprising the steps of:
inputting, from an image medium, image information embedded with identifier information as secret information;
extracting the identifier information from the image information;
inputting a search condition for the image information; and
searching the image information based on the identifier information and search condition.

9. The image search method according to claim 8, wherein
said secret information is a steganography which divides said image information into a plurality of blocks and manipulates characteristic information of the blocks and/or between blocks, thereby coding said identifier information and embedding it in the image information.

10. The image search method according to claim 8, wherein
said image medium is constituted by at least one of a printed medium on which said image information is visibly printed, a storage medium storing the image information and a communication medium for transmitting the image information.

11. The image search method according to claim 8,
inputting said search condition by means of a voice recognition.

12. The image search method according to claim 8,
storing said identifier information and video picture name by correlating them with each other in a table, and searching said image information by converting the video picture name externally specified as the search condition into the identifier information.

13. The image search method according to claim 8,
extracting said search condition from a printed medium on which search image information embedded with the search condition as a steganography is printed, and using the search condition for searching the image information.

14. An image search method, comprising the steps of:
inputting, from an image medium, image information embedded with identifier information as secret information;
extracting the identifier information from the image information; and
judging a presence or absence of an alteration in the image information based on the identifier information.

15. An image search method, comprising the steps of:
inputting image information;
inputting a search condition from a printed medium on which search image information embedded with the search condition as a steganography for the image information is printed; and
searching the image information based on the search condition.

16. An image production apparatus, comprising:
an input unit for inputting image information;
a steganography embedment unit for embedding identifier information, which is used for searching the image information, in the aforementioned image information as a steganography which is not lost in the process of converting the image information into analog information; and
an image output unit for outputting the image information embedded with the steganography to an image medium.

17. The image production apparatus according to claim 16, wherein
said image medium is constituted by at least one of a printed medium on which said image information is visibly printed, a storage medium storing the image information and a communication medium for transmitting the image information.

18. An image production method, comprising the steps of:
inputting image information;
embedding identifier information, which is used for searching the image information, in the aforementioned image information as a steganography which is not lost in the process of converting the image information into analog information; and
outputting the image information embedded with the steganography to an image medium.

19. The image production method according to claim 18, wherein
said image medium is constituted by at least one of a printed medium on which said image information is visibly printed, a storage medium storing the image information and a communication medium for transmitting the image information.

20. A program for making a computer which comprises an image search apparatus execute the steps of:
inputting, from an image medium, image information embedded with identifier information as secret information;
extracting the identifier information from the image information;
inputting a search condition for the image information; and
searching the image information based on the identifier information and search condition.

21. The program according to claim 20, wherein
said secret information is a steganography which divides said image information into a plurality of blocks and manipulates characteristic information of the blocks and/or between blocks, thereby coding said identifier information and embedding it in the image information.

22. The program according to claim 20, wherein
said image medium is constituted by at least one of a printed medium on which said image information is visibly printed, a storage medium storing the image information and a communication medium for transmitting the image information.

23. The program according to claim 20,
inputting said search condition by means of a voice recognition.

24. The program according to claim 20,
extracting said search condition from a printed medium on which search image information embedded with the search condition as a steganography is printed, and using the search condition for searching the image information.

25. A program for making a computer which controls an image production apparatus execute the steps of:
inputting image information;
embedding identifier information, which is used for searching the image information, in the aforementioned image information as a steganography which is not lost in the process of converting the image information into analog information; and
outputting the image information embedded with the steganography to an image medium.

26. The program according to claim 25, wherein
said image medium is constituted by at least one of a printed medium on which said image information is visibly printed, a storage medium storing the image information and a communication medium for transmitting the image information.
